Europäisches Patentamt

European Patent Office

Office européen des brevets

(11) Publication number: **0 082 669**
**A2**

# EUROPEAN PATENT APPLICATION

(21) Application number: 82306688.1

(22) Date of filing: 15.12.82

(51) Int. Cl.³: **G 05 D 23/19**
**F 24 D 19/10**

(30) Priority: 17.12.81 US 331722

(43) Date of publication of application:
29.06.83 Bulletin 83/26

(84) Designated Contracting States:
AT BE CH DE FR GB IT LI LU NL SE

(71) Applicant: THERMONIC CORP.
8348 State Road
Philadelphia Pennsylvania 19136(US)

(72) Inventor: Cargil, Norman Allen
1131 Tollhouse Road
Warminster Pennsylvania 18974(US)

(72) Inventor: Bunten, Theodore Mory
P.O. Box 226
Fort Washington Penna 19034(US)

(74) Representative: Shaw, Laurence
George House George Road
Edgbaston Birmingham B15 1PG(GB)

(54) Control for building heating system.

(57) A heating system for a building is controlled by a multifunctional microprocessor (122). Input signals from an external temperature sensor (50) and a sensor (46) connected to the heat exchanger (26) are passed via a limit and decode circuit (130) to the microprocessor (122) which generates separate output signals to the heat exchanger (26) and a circulating means (28). The microprocessor (122) disables the fuel burner (32) if the temperature of the fluid side of the heat exchanger (26) will be exceeded. There is a regulated power supply circuit (124), and the microprocessor (122) controls an audible alarm circuit (132), a safety lockout circuit (134), and a display circuit (136). A hot water override circuit (128) is also present.

FIG. 2

Croydon Printing Company Ltd

0082669

THERMONIC CORP                    AGENTS REF 1081


CONTROL FOR BUILDING

HEATING SYSTEM


This invention relates generally to building
heating systems, and more particularly to control of
heating systems.

In most building heating systems, the heat
exchanger (eg. boiler or furnace), has a reserve
capacity to produce more heat into the heating fluid
(the water of a boiler system or air of a furnace)
than the system requires for heating the building.
Accordingly, heating systems include "primary controls"
which establish the maximum limit (called the "high
limit") that the heat exchanger can run at before the
control turns it off.  Primary controllers work in
co-operation with thermostat of the building but
override the thermostat if the high limit is exceeded
by a call for heat by the thermostat.  When the thermostat registers that the building temperature has been achieved, the circulator, pump or fan is turned off. The latent heat within the water or air is wasted and this is commonly referred to as "stand-by loss".

Devices are known to modulate the heat exchanger temperature as a function of the outdoor temperature. Such devices include an outdoor temperature sensor which is connected to the primary controller and to other portions of the heating system

In the United States Patent No. 4,290,551 (Johnstone), there is disclosed an electronic controller for a heating system which includes means for modulating the boiler temperature in response to sensed outdoor temperature and for enabling the pump to circulate the heated water through the building even when the burner is off (providing that the water is above a pre-determined temperature) to reduce stand-by loss. Many additional add-on devices are necessary to make this proposal into a complete system.

In heating systems having a so-called "summer/winter hookup" a domestic hot water electric coil is located within the boiler to heat the domestic water. Apparatus is present to establish a low-limit for the boiler water temperature to ensure that the domestic hot water is heated to the desired minimum level even when the thermostat is not calling for heat.  Since the temperature of the domestic hot water is typically in the range of $50^{\circ}C$ to $68^{\circ}C$ (120-150$^{\circ}F$) the low-limit for boiler water temperature must be much higher, eg. $68^{\circ}C$

to $90^{\circ}C$ (150-190$^{\circ}F$).  Such apparatus is often add-on units which must be physically incorporated into the heating system.

Other add-on devices are available for providing a pre-determined time period during which the burner is

operated to produce domestic hot water when there is no call for heat by the thermostat.

The most common type of primary control for a heating system is an electro mechanical control for sensing the temperature of the heat exchanger.  This may be a temperature sensing probe for oil or gas fired boilers and take the form of a fluid-filled capillary tube.  Such probes fail on occasion and this can lead to dangerous situations.

In oil-fired burner applications a flame detecting device is provided in the heating system to produce a signal indicative of the existence of a flame at the burner. The device is coupled to means for
disabling ("locking-out") the burner in the event that
a flame is not sensed within a fixed period of time,
eg. 10 seconds after the building thermostat calls for
the burner to ignite. The most popular detecting device
comprises a cadmium sulphide CdS cell located adjacent
the burner head and electro mechanical means coupled to
the cell. The electro mechanical means frequently
comprises a bimetallic element which is heated to establish
the time period during which flame ignition must occur.
Because of the electro mechanical construction of such
flame sensing devices, the time constant is not as precise
as desired.

For gas-fired burner applications a thermocouple
is present in the gas burner pilot flame and is connected
to dis-enabling means for preventing the main gas valve
from opening if the pilot flame is not on.

According to one aspect of this invention there
is provided an integrated multifunctional control device
for the heating system for a building, the system
comprising a fuel burner, a heat exchanger having a
combustion side and a fluid heating side, heat radiating means coupled to the heat exchanger, circulatory means
for transporting heating fluids between the exchanger and
the radiating means, an adjustable thermostat in the
building, a first temperature sensor located outside the
building, a second temperature sensor for sensing the
temperature of the fluid side of the heat exchanger, the
sensors providing control signals to a control device,
and limiting means for limiting the temperature of the
fluid side of the heat exchanger characterised in that
the integrated multifunctional device comprises a
micro processor which is arranged to respond to the
input signals from the first and second sensors and to
generate separate control signals to the burner and
the circulating means, and to disable the burner if the
temperature limit of the fluid side of the heat exchanger
will be exceeded.

Most preferably, the micro processor is arranged
to disable the circulating means if the fluid side
temperature falls below a predetermined value.

In a preferred feature, alarm means are associated with the temperature sensing means for the fluid side temperature and the micro processor is arranged to check and when necessary actuate the alarm means. Most preferably display means are present to display the condition of the monitors and alarm signals.

In a preferred feature, the heat exchanger comprises a boiler which heats water which is circulated by a pump and the heating system includes a domestic hot water coil and a means are present for controlling the domestic hot water temperature in response to an external signal when the boiler water temperature is below a predetermined threshold value. Preferably the external signal is an over-ride signal and the controlling means is responsive to the over-ride signal and the micro processor is responsive to the over-ride control means and arranged to actuate the burner to raise the temperature of the domestic water for a predetermined time period.

Preferably, a manually operable switch is present to generate the over-ride signal. In a preferred feature programmable clock means are present to generate the over-ride signals.

The device preferably includes disabling means present to disable the pump if the water temperature is being raised such that the building temperature will exceed its predetermined upper limit during the over-ride time period.

The device may be used when the heating system is oil fired and includes a light-detecting element for detecting and signalling the existence of a flame at the burner and for providing a signal indicative thereof, and the micro processor is preferably arranged to be responsive to the signal and is arranged to disable the burner and the circulating means in the event that the light-detecting means fail to provide the signal within a predetermined time after the burner is called upon to ignite by the micro processor.

In order that the invention may be well understood it will now be described with reference to the accompanying diagrammatic drawings in which:-

Figure 1 is a schematic diagram of a building heating system including a controller of the invention;

Figure 2 is a schematic diagram of the controller of Figure 1;

Figures 3A and 3B are each a schematic diagram showing a portion of the circuitry of the controller shown in Figure 2;

Figures 4A and 4B are flow charts corresponding to Figures 3A and 3B; and

Figure 5 is a program listing of the flow charts of Figures 4A and 4B.

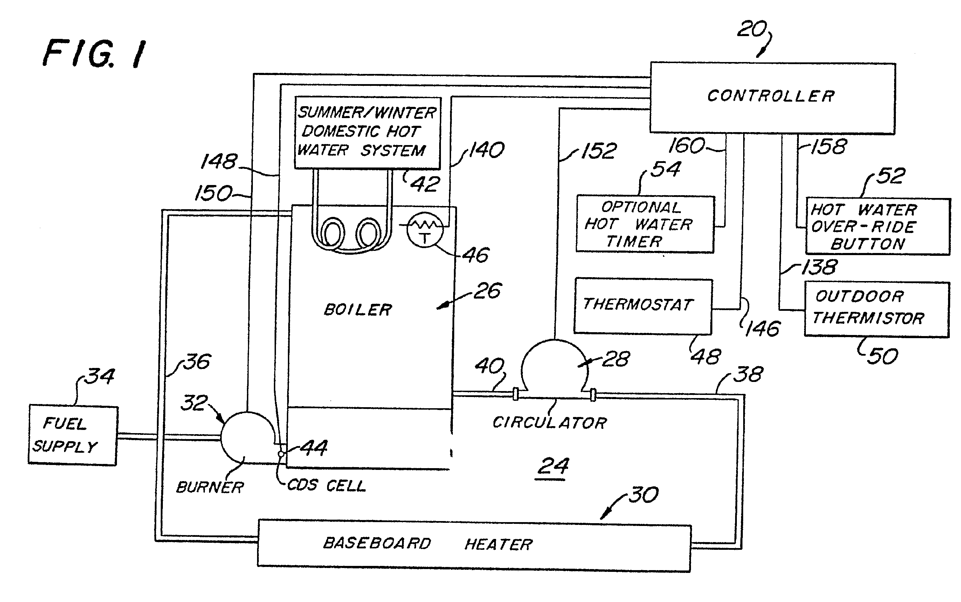

There is shown in Figure 1 an integrated micro-processor-based, controller 20 for a residential building heating system 24.

The heating system 24 comprises a heat exchanger, eg. boiler 26, a circulator, eg. pump 28, a baseboard heater 30, a burner 32 and a fuel supply 34. The burner 32 is located at the combustion side of the boiler 26 and is arranged to burn the fuel supplied by the fuel source 34 to heat the water in the boiler. The water heated by the

boiler is circulated through a conduit 36, the baseboard
heater 30, and through conduits 38 and 40 back to the
boiler by the pump 28.

The boiler 26 is an oil-fired boiler having a
cadmium sulphide (CdS) flame sensing detector 44.  A
domestic hot water system of the summer/winter type 42
is present.  There is   a thermostat 48 and an outdoor
thermostat 50.  A thermistor 46 is present as the primary
temperature probe for the boiler.

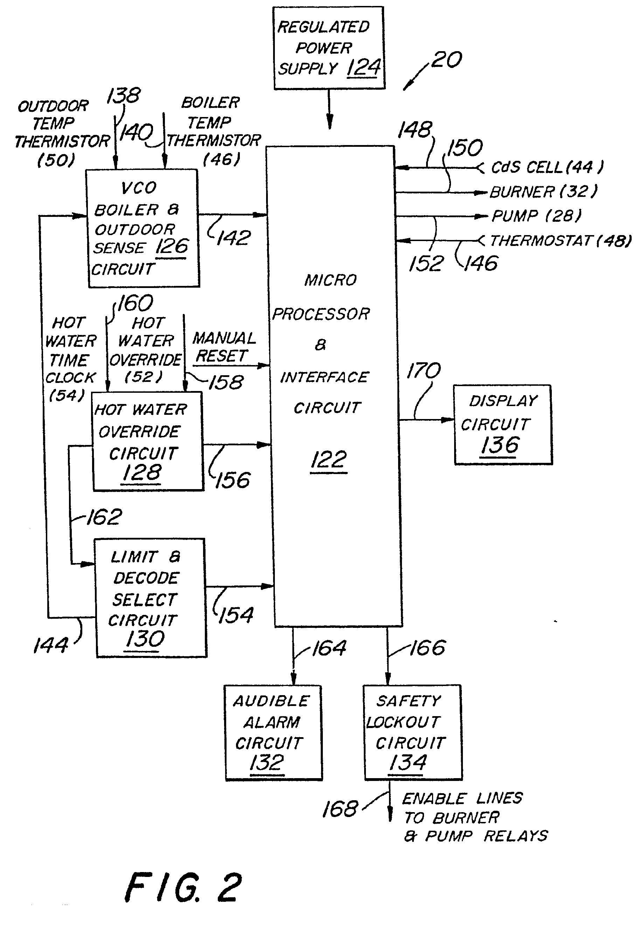

As shown in Figure 2, the controller of the
invention comprises a microprocessor and an interface
circuit 122, a regulated power supply 124, a VCO boiler
and outdoor sense circuit 126, a hot-water override
circuit 128, a limit and decode select circuit 130, an
audible alarm circuit 132, a safety lockout circuit 134 and
a display circuit 136.

The VCO boiler and outdoor sense circuit 126
is arranged to receive an input through line 138 from the
outdoor thermistor 50 and a second input through line 140
from the boiler thermistor 46.  The circuit 126 is arranged
to provide a pulse train to the microprocessor and interface
circuit 122 under the control of the limit and decode
select circuit 130 via line 142.  The pulse train is proportional to the temperature sensed by either the outdoor thermistor 50 or the boiler temperature thermistor 46. The limit and decode select circuit 130 has an output connected via line 144 to the VCO boiler and outdoor sense circuit 126.

The microprocessor and interface circuit 122 is arranged to count the pulses provided from the boiler and outdoor sense circuit 126 and to convert them into a real temperature for display purposes and for calculating and maintaining the temperature which has been set by the thermostat 48. The thermostat 48 and the CdS cell 44 are each connected to inputs of the microprocessor and interface circuit 122 via lines 146 and 148 respectively. One output of the microprocessor is provided via line 150 to the burner 32 and another output of the microprocessor is provided via line 152 to the pump 28 to initiate operation of the burner and pump, respectively.

The limit and decode select circuit 130 establishes the high limit for the boiler water operating temperature for heating and where the boiler system includes a summer/winter coil, the limit and decode select circuitry 130 also establishes the low limit for boiler water operating temperature for domestic hot water. Thus, the limit and decode select circuit 130 provides binary coded deciman (BCD) signals via line 154 to the
microprocessor to establish decode settings for heating
and domestic water.

The hot water override circuit 128 provides an
override signal for summer/winter domestic water hookup
on line 156 to the microprocessor and interface circuit 122.
The override signal establishes a pre-determined time
period, eg. one hour during which the microprocessor
controls the pump 28, igniting the burner if the thermostat
is not requesting more heat and if the sensed boiler water
temperature is below the temperature, eg. $54^{\circ}C$ ($160^{\circ}F$)
set by the limit and decode select circuit 130 for domestic
hot water. The override period can be established either
manually or automatically. A manual signal is produced by
the depression of the hot-water override button coupled
via line 158 to the hot-water override circuit 128. The
hot-water override button can be a single button 52
(Figure 1), or several interconnected buttons can be
located about the building adjacent hot water taps or
appliances to enable one to conveniently call for a hot-
water override cycle. A timed override cycle can be
established by a pre-programmed timer or clock 54 sending
signals via line 160 to the hot-water override circuit 128.

The hot-water override circuit 128 acts as a timer in response to signals from line 158 or line 160 to provide
an override signal via line 156 to the microprocessor and
interface circuit 122. The hot-water override circuit
provides a signal via line 162 to the limit and decode
select circuit 130 to indicate the override condition so
that the limit and decode select circuit 130 can provide
the domestic water limit setting signal via line 154 to
the microprocessor 122.

The microprocessor is arranged to operate in
response to signals on lines 142 and 148 to provide signals
to the audible alarm circuit 132 and the safety lockout
circuit 134 via lines 164 and 166 respectively to indicate
a safety lockout condition. Detection of a failure of
the primary temperature probe 46 or a failure of the CdS
cell 44 or a failure of the burner to ignite after a
pre-determined period of time (such as caused by a lack
of fuel at the burner or for other reasons) will cause a
safety lockout condition. The alarm circuit 132 provides
a pulse setting alarm signal if there is an alarm
condition. The safety lockout circuit 134 provides a
lockout or disable signal on lines 168 to the burner and
pump relays to cut them out overriding burner and pump
operation initiate signals on lines 150 and 152
respectively.

The display circuit 136 is coupled to the microprocessor interface circuit via lines 170 to provide a digital (seven segment) alpha/numeric display of boiler operating temperature as well as system operating conditions, eg. probe failure, CdS cell failure, etc.

The regulated power supply 124 provides a power supply for all circuitry of the controller. The supply 124 also provides the operating components of the controller 24 with the +5 volts required for proper operation, the +12 volts for the burner and pump relays, and provide the alarm circuit with -12 VDC (unregulated) for buzzer operation (to be described later).

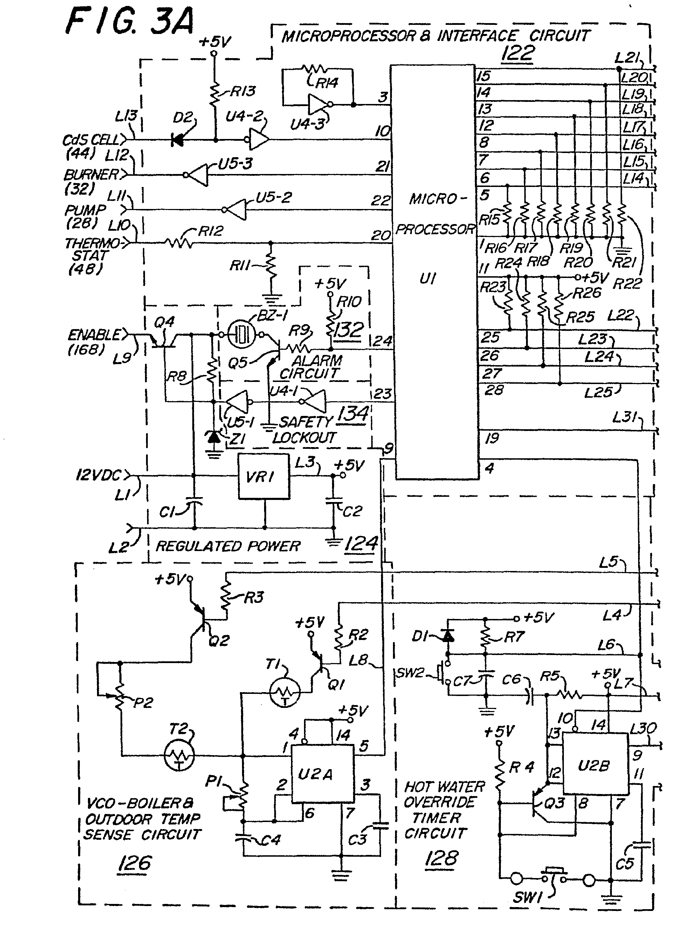

As can be seen in Figure 3A, the regulated power supply 124 comprises an integrated circuit regulator VR1, such as Model LM340T5, sold by National Semiconductor. A 12 volt DC unregulated voltage is provided via line L1 to one input of the regulator VR1. One side of capacitor C1 is connected to line L1 and to ground or earth line L2. The ground line L2 is also connected to the appropriate ground pin of VR1. One side of capacitor C2 is connected between the grounded line L2 and line L3. Line L3 is the regulated output of VR1 and provide +5 volts bias to the electronic components making up the system 20. The power supply 124 also includes a transistor Q4 whose emmitter is connected to line L9 which enables the pump and burner solenoids to initiate operation of the pump and burner when appropriate signals are provided by the microprocessor on lines 152 and 150, respectively. The base of transistor Q4 is connected to the common junction of a resistor R8, the cathode of a zener diode Z1 and to the output of an integrated circuit driver U5-1 (of the safety lockout circuit 134) to provide a 12 volt series pass regulator.

The VCO boiler and outdoor sense circuit 126 comprises an astable timer U2A, in the form of one half of a 556 dual timer configured to operate in the astable mode. One commercially available suitable 556 dual timer is sold by National Semiconductor as Model LM556CN. The pin 7 of U2A is connected to ground and to one side of a capacitor C3 and one side of another capacitor C4. The other side of capacitor C3 is connected to pin 3 of U2A. The other side of capacitor C4 is connected to one side of a potentiometer P1 and its wiper arm and to the common junction of pins 2 and 6 of U2A. The other side of the potentiometer P1 is connected to one side of a thermistor T2, to one side of a thermistor T1 and to pin 1 of U2A. Pins 4 and 14 of U2A are connected together to the +5 volt bias. Pin 5 of U2A is connected to line L8. The other side of thermistor T1 is connected to one side of a potentiometer P2. The other side of P2 and its wiper arm are connected to the collector of a transistor Q2.  The other side of

thermistor T1 is connected to the collector of a

transistor Q1.  The emitter of transistor Q1 is connected to the +5 volt bias.  The base of transistor Q1 is connected

to one side of a resistor R2.  The other side of resistor R2 is connected to line L4.  The emitter of transistor Q2 is

connected to the +5 volt bias and the base of the transistor

is connected to one side of a resistor R3.  The other side of resistor R3 is connected to line L5.  The thermistor T1

serves as the boiler temperature sensing probe 46 and the

thermistor T2 serves as the outdoor temperature sensor 50.

The capacitor C3 serves as a suppression

capacitor and resistors R1 and R3 serve as interface elements

for the driving transistors Q1 and Q2.  The output signals

from the oscillator U2A are provided via line 8 to pin 6

of the microprocessor U1.

The operation of VCO 126 is as follows:  The half-timer element U2A operates as a timer in an astable mode, with the time constant of the oscillator frequency being established by the setting of either thermistor T1

or T2 by microprocessor control via lines L4 and L5.

When the oscillator frequency is to be established by the boiler water temperature as sensed by T1, an appropriate

signal is provided on line L4 to render transistor Q1

conductive.  When the microprocessor provides an appropriate signal on line L5, transistor Q2 is rendered conductive
whereupon the frequency of oscillation produced by the
oscillator U2A is a function of outdoor temperature as sensed
by thermistor T2. A potentiometer P2 is also set, and
this serves to adjust the system 20 to the efficiency of
the building heating system 24 (some buildings can be heated
more efficiently than others due to the heat dissipating
or insulative properties of the building). The potentio-
meter P2 is coupled to means on the housing (not shown)
of the controller to establish the desired efficiency
setting for the building's heating system.

The hot-water override timer circuit 128
comprises the other half U2B of the 556 dual timer,
described with reference to circuit 126, and arranged to
operate in a monostable mode. Pin 7 of U2B is connected
to ground and to one side of a manual push switch SW1 and to
one side of a capacitor C5. The other side of capacitor
C5 is connected to pin 11 of U2B. Pin 7 of U2B is also
connected to the collector of a transistor Q3. The base
of transistor Q3 is connected to the other side of
switch SW1, to pin 8 of U2B and to one side of a resistor
R4. The other side of resistor R4 is connected to the
-5 volt bias. The emmitter of transistor Q3 is connected
to the common junction of pins 12 and 13 of U2B, one side
of a resistor R5 and one side of capacitor C6. Pin 10 of
U2B is connected to line L6. Pin 14 of U2B is connected

to the other side of resistor R5, to the +5 volt bias and to a line L7. Line L7 is connected to one output terminal for an optional, programmable hot-water override clock shown schematically at 54 in Figure 1. Pin 9 of U2B is connected, via line L30 to one side of a resistor R6. The other side of resistor R6 is connected to a line L26 and to the input terminal from the optional clock. The other side of capacitor C6 is connected to ground,to one side of a capacitor C7 and to one side of a push button switch SW2. The other side of capacitor C7 is connected to the other side of switch SW2, to the common junction of the anode of a diaode D1, to one side

of a resistor R7 and to line L6. The other side of resistor R7 and the cathode of diode D1 are connected

together to the +5 volt bias. The switch SW1 serves as

the hot-water override button 52, while the switch SW2 serves as a manual reset switch for the system.

The operation of the hot-water override timer circuit 128 is as follows. The circuit U2B, operates as a retriggerable, monostable, multivibrator having a one hour time constant which is established by resistor R5 and capacitor C6. Operation of the timer is initiated by the depression of manual override switch SW1. When SW1

is depressed, the monostable multivibrator U2B is rendered conductive, via the input signal at pin 8. If switch SW1

is depressed during the time cycle, transistor Q3 is
rendered conductive to discharge capacitor C7, whereupon
a new one hour time cycle starts immediately. Thus, one
can increase the length of the override cycle by depression
of SW1 before U2B times out. Pin 9 of the monostable
multivibrator U2B is coupled via resistor R6 to line L26
as an input to the limit decode and select circuit 30 so
that the microprocessor U1 is alerted when there is a
request for hot water, ie. switch SW1 is depressed.

The safety lockout circuit 134 basically
comprises a driver U5-1 and a Schmitt Trigger U4-1. The
driver U5-1 may be Model DS88?7N sold by National
Semiconductor. The input to the driver U5-1 is connected
from the output of a Schmitt Trigger U4-1. The Schmitt
Trigger may be Model MM74C14N sold by National Semiconductor.
The input to the Schmitt Trigger U4-1 is connected from
pin 23 of the microprocessor U1. The anode of zener diode
is connected to ground. The collector of transistor Q4
is connected to line L1 and to the other side of resistor
R8.

The safety lockout circuit 134 operates as follows.
In the event of an alarm or lockout conditions, a signal
is provided at pin 23 of the of the microprocessor U1. The
unregulated 12 volt DC is provided from the line L1 to

the collector of transistor Q4. In the absence of a lockout condition, the output of U5-1 is high so that the transistor Q4 is conductive, so applying the regulated 12 volt DC to the line L9, which line is connected to the enable lines 168 of the burner and pump. Upon the occurrence of a lockout condition, the output of U5-1 goes low, whereupon the transistor Q4 of the supply circuit 124 ceases conducting, so disabling the enable lines 168 so that the relays of the pump and burner are disabled, whereupon operation of both the pump and burner are disabled irrespective of the signals being provided to the pump and burner via lines 28 and 32 respectively. To reset the system after a lockout, the manual reset switch SW1 is depressed to provide a reset signal via line L6 to the reset pin of the microprocessor so resetting the controller. The resistor R7 and capacitor C6 serve to reset automatically the microprocessor in the event of a momentary power failure.

The alarm circuit 132 comprises a transistor Q5, whose emmitter is connected to ground. The collector of transistor Q5 is connected to one side of buzzer BZ1. The buzzer may be model SL120 sold by Shogyo. The other side of the buzzer BZ1 is connected to the unregulated 12 volt DC from L1. The base of transistor Q5 is connected to one side of a resistor R9. The other side of resistor R9 is connected to one side of another resistor R10 and to pin 24 of the microprocessor, to be described later. The other side of resistor R10 is connected to the +5 volt bias.

Operation of the alarm circuit 132 is as follows. When an alarm condition occurs a high signal appears on pin 24 on the microprocessor U1, whereupon transistor Q5 is rendered conductive and the buzzer BZ1 is sounded.

The microprocessor and interface circuit 122 comprises a microprocessor U1, such as Model COP420N, sold by National Semiconductor, and various associated interface circuitry. The pin 20 of the microprocessor U1 is connected to one side of a resistor R11 and to one side of another resistor R12. The other side of resistor R11 is connected to ground. The other side of resistor R12 is connected to line L10, which is connected to the thermistor 48. Pin 22 of the microprocessor U1 is connected to one side of a driver U5-2. Driver U5-2 is of the same type as driver U5-1. The output of driver U5-2 is connected to line L11, which is in turn connected to the pump relay 28. Pin 21 of the microprocessor U1 is connected to the input of a driver U5-3. The driver U5-3 is similar to drivers U5-2 and U5-1. The output of driver U5-3 is connected to L12, which is in turn connected to the burner relay 32. The input from the CdS cell 44 is

**0082669**

provided, via line L13, to the cathode of a diode D2.

The anode of diode D2 is connected to one side of a resistor R13 and to the input of a Schmitt Trigger U4-2.

The Schmitt Trigger U4-2 is similar to Schmitt Trigger U4-1 described above. The output of the Schmitt Trigger U4-2 is connected to pin 10 of the microprocessor U1.

The other side of resistor R13 is connected to the +5 volt bias. Pin 3 of the microprocessor U1 is connected to the common junction of a resistor R14 and the output of a Schmitt Trigger U4-3. The Schmitt Trigger U4-3 is similar to Schmitt Triggers U4-2 and U4-1. The input of Schmitt Trigger U4-3 is connected to the other side of resistor R14.

The output pins 5, 6, 7, 8, 12, 13, 14 and 15 of

microprocessor U1 are connected to bus lines L14, L15,

L16, L17, L18, L19, L20 and L21, respectively. Resistors

R15, R16, R17, R18, R19, R20, R21 and R22 are connected

between ground and lines L14, L15, L16, L17, L18, L19,

L20 and L21, respectively. Pin 1 of the microprocessor is connected to ground. Pin 11 of the microprocessor is connected to the +5 volt bias and to one side of resistors R23, R24, R25 and R26. The other side of resistors R23, R24, R25 and R26 are connected to bus lines L22, L23, L24

and L25, respectively. Pins 25, 26, 27 and 28 of

microprocessor U1 are connected to lines L22, L23, L24 and L25 respectively. Pin 4 of the microprocessor is

connected to line L6. Pin 9 of the microprocessor is connected to line L8. Pin 19 of the microprocessor is connected, via line L31, to one side of a low-limit switch SW4, to be described later.

The resistors R15 to R22 and resistors R23-R26 are connected to the bus lines and serve as pull up or pull down resistors to establish the basic binary states on the bus lines for the microprocessor. The integrated circuit U4-3 and its associated resistor R14 form the clock input for the microprocessor.

The input line L13 indicating the condition of the CdS cell is provided via diode D2 and Schmitt Trigger U4-2 to input pin 10 of the microprocessor U1. The diode D2 provides no function in oil fired heating systems. However, when the controller is used in a gas fired system, ie. one that does not utilise a CdS cell, lines L12 and L13 are bridged by a jumper strap so that the diode D2 simulates the operation of a working CdS cell. The Schmitt Trigger U4-2 senses the signal from line L13 to provide an input signal indicating the operativeness of the CdS cell whenever the sensed level on line L13 is above or below the predetermined level of the Schmitt Trigger. U5-3 serves as the driver for the burner relay, while driver U5-2 serves as the driver for the pump relay. The voltage input from the thermostat 48 provided on line L10 is divided by
the voltage divider comprising resistors R11 and R12
to provide an appropriate level signal for input at pin
20 to the microprocessor.

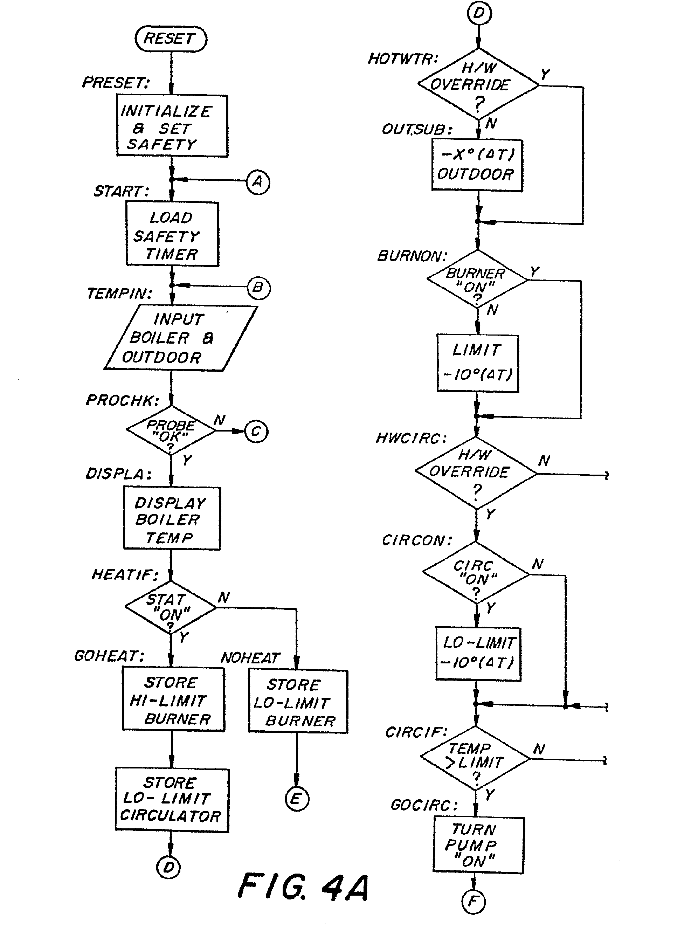

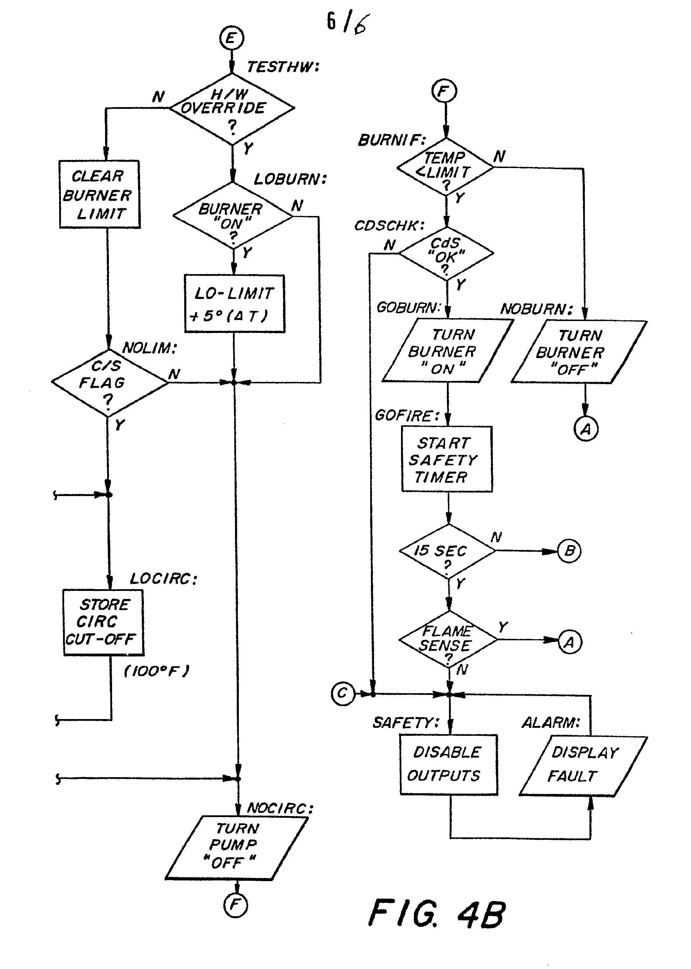

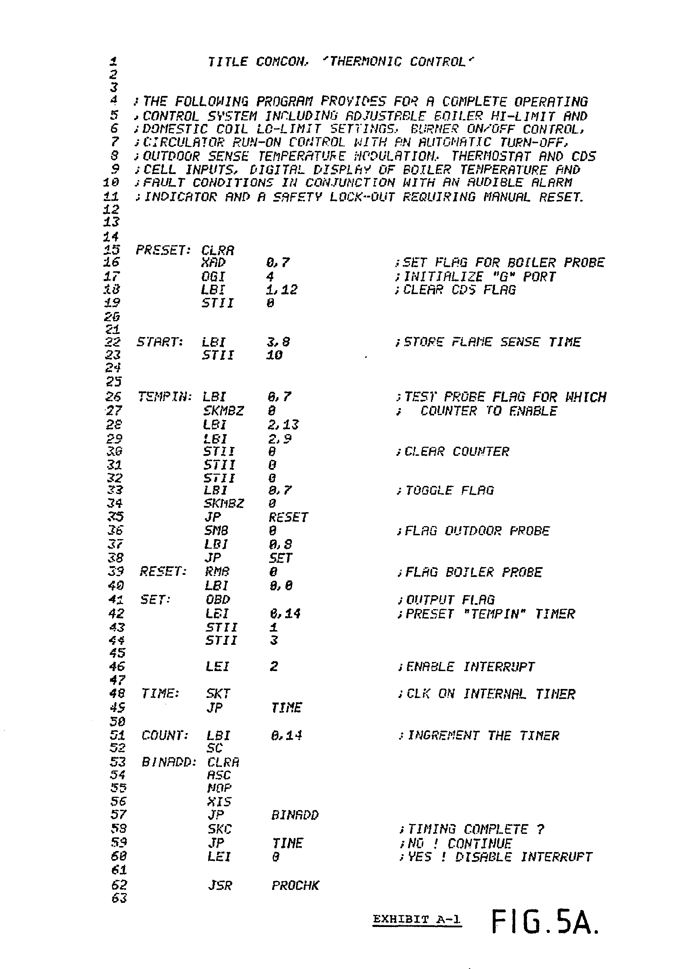

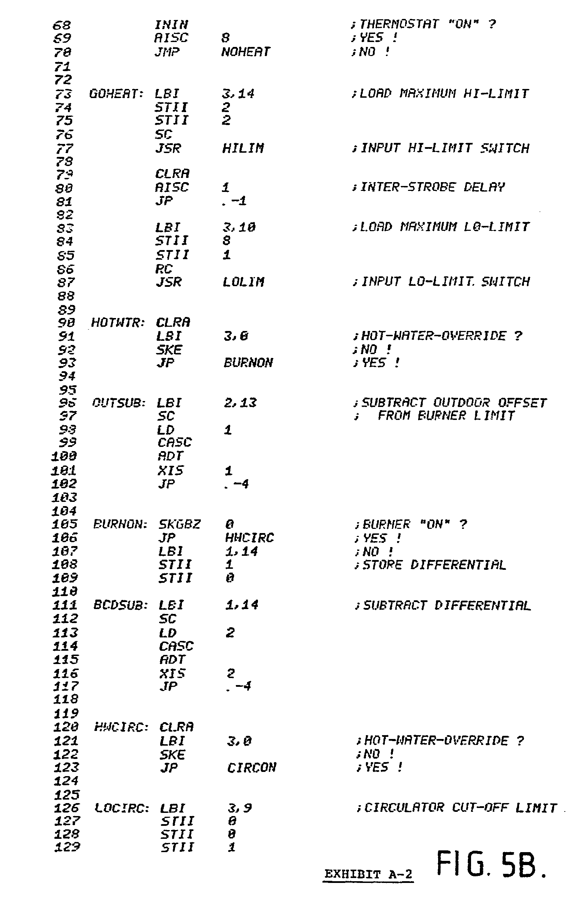

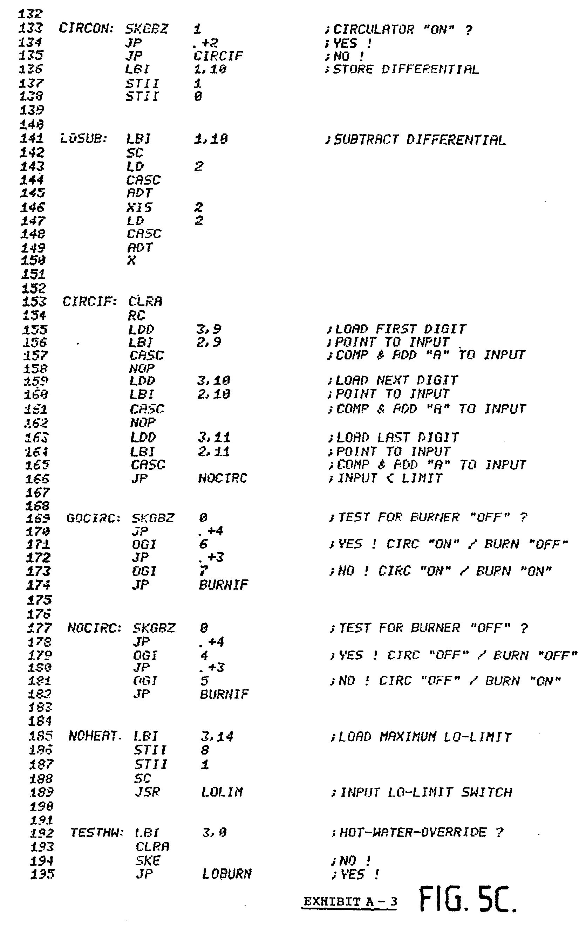

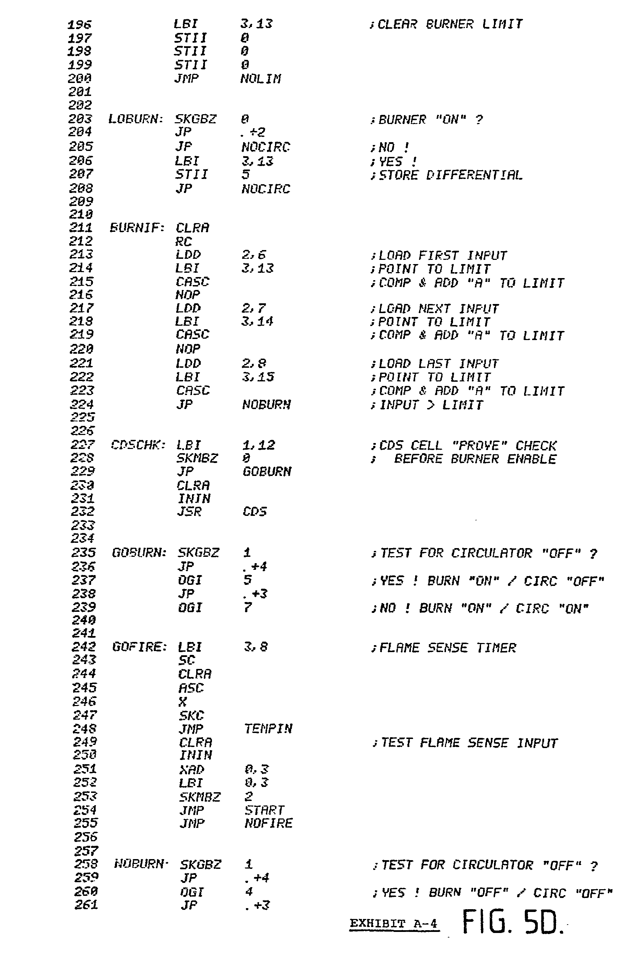

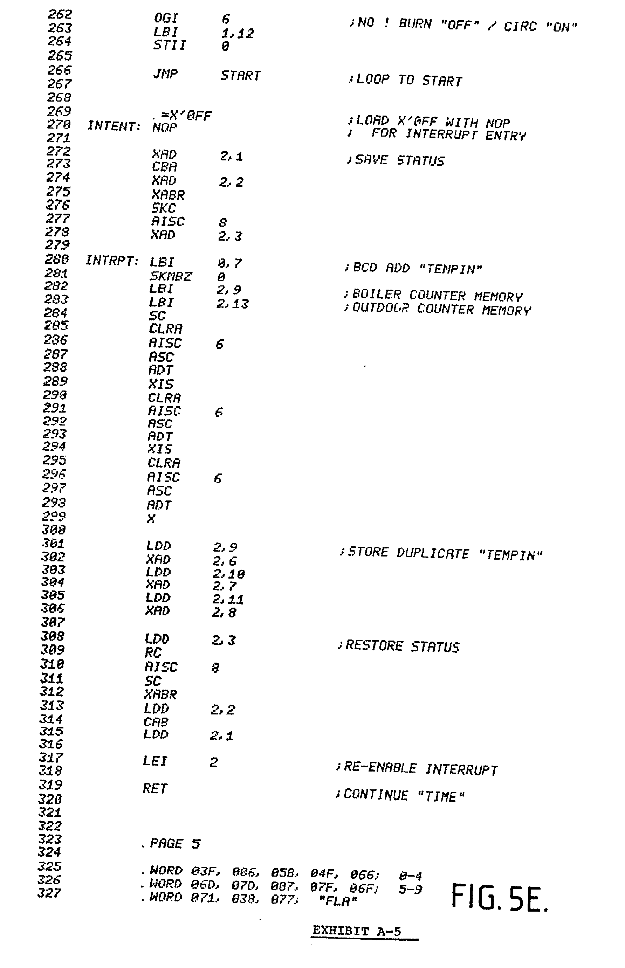

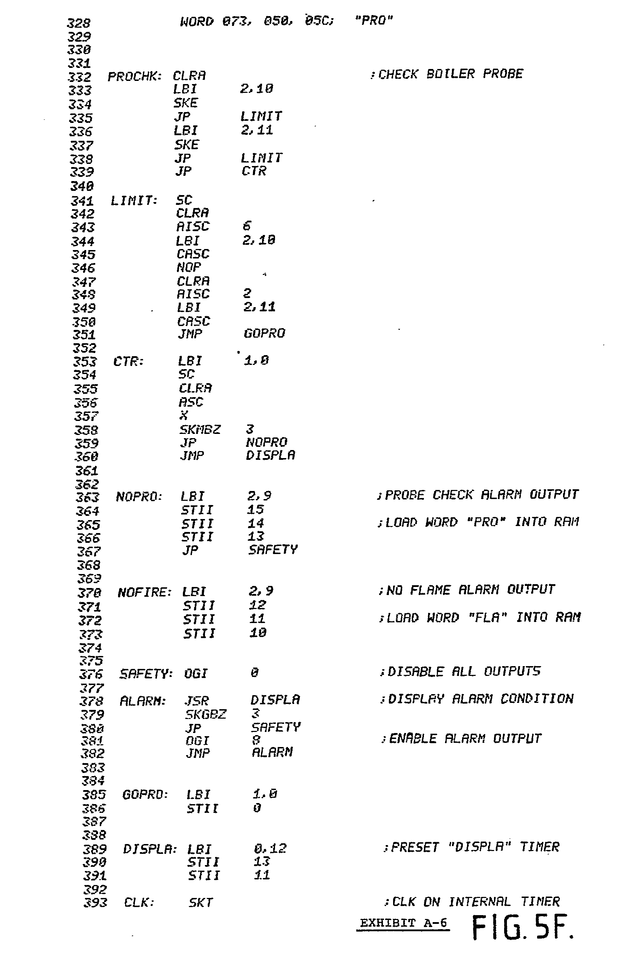

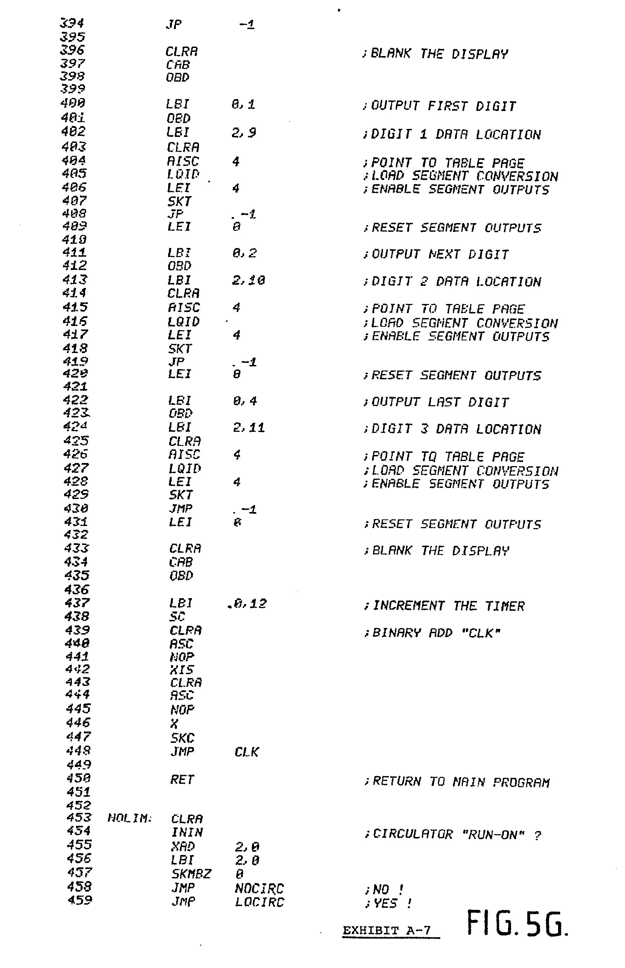

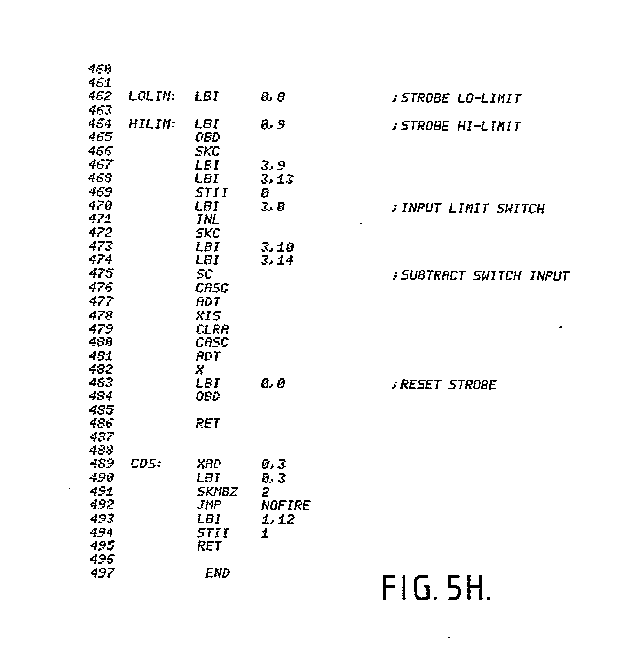

A flow chart of the operation of the microprocessor
is provided in Figures 4A and 4B, and the program listing
of Figure 5.

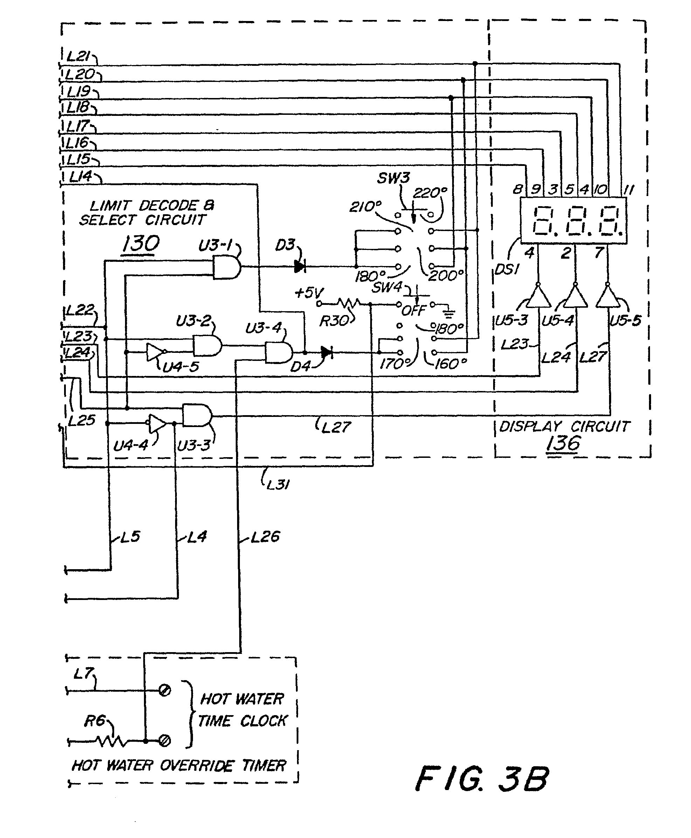

The limit decode and select circuitry, best
seen in Figure 3B, comprises a Schmitt Trigger U4-4, whose
input is connected to the common junction of lines L5 and L22,
to one input of AND gate U3-1, and to one input of AND gate
U3-2. The other input to AND gate U3-1 is connected to line
L11, to the input of a Schmitt Trigger U4-5 and to one input
of AND gate U3-3. The output of Schmitt Trigger U4-5 is
connected as the other input to AND gate U3-1. The other
input to AND gate U3-3 is connected to the output of
Schmitt Trigger U4-4 and to line L4. The output of AND
gate U3-1 is connected to the anode of a diode D3. The
output of AND gate U3-2 is connected to one input of AND
gate U3-4. The other input of AND gate U3-4 is connected
to line L26. The output of AND gate U3-4 is connected to
line L14 and to the anode of a diode D4. The output of AND
gate U3-3 is connected to line L27. The cathode of diode
D3 is connected to one side of a plural contact slide

0082669

AGENTS REF 1081

switch SW3. Switch SW3 establishes the "high limit" for the heat exchanger. The cathode of diode D4 is connected to one side of another plural contact slide switch SW4. The switch SW4 establishes the "low-limit", ie. the domestic hot water limit, for systems including a summer/winter coil.

The operation of the limit decode and select circuit is as follows. Under the control of the microprocessor, the gates and inverters of the limit decode circuitry enable which of the two limit switches SW3 (high limit switch) and SW4 (low limit switch) are selected for inputting into the microprocessor via lines L19, L20 or L21. Since the microprocessor bus lines are bi-directional, the diodes D3 and D4 serve as blocking diodes to prevent any signal present on the bus from backing up through gates U3-1 and U3-4, respectively.

The high limit switch SW3 comprises a movable (slider) contactor and four pairs of stationary contacts, any one of which pair can be bridged by the movement of the slider contact. The stationary contacts of SW3 are unnumbered but represent in order the high limit settings of $100^{\circ}C$ ($212^{\circ}F$), $95^{\circ}C$ ($210^{\circ}F$), $90^{\circ}C$ ($200^{\circ}F$) and $82^{\circ}C$ ($180^{\circ}F$). Thus one contact of the pairs defining the temperatures $82^{\circ}-100^{\circ}C$ ($180^{\circ}-210^{\circ}F$) is connected to the cathode of diode D3, while the corresponding contacts
of each of said pairs is connected to bus lines L19, L20
and L21 respectively, to the microprocessor. In a similar
manner, the SW4 comprises a slide switch having a sliding
contactor and four pairs of contacts representing the
temperatures $82^{\circ}C$ ($180^{\circ}F$), $76^{\circ}C$ ($170^{\circ}F$), $70^{\circ}C$ ($160^{\circ}F$) and
OFF. One contact of the pairs defining the temperatures
$70^{\circ}C$ ($160^{\circ}F$) and $76^{\circ}C$ ($170^{\circ}F$) are connected together to
the cathode of diode D4, while the other contacts of those
pairs are connected to bus lines L20 and L21 respectively.
Depending on which switch contacts are bridged, the
microprocessor is provided with data establishing the
desired high limit and low limit for the heating system.
The slide switch SW4 also includes another pair of contacts
which define an OFF condition. One contact of that pair
is connected to ground, while the other contact is connected
to one side of a resistor R30. When the slider bridges
the OFF contacts, the switch defeats operation of the low
limit and forces constant circulation with thermostat 48
on or off down to a programmed cut-off temperature ie.
$38^{\circ}C$ ($100^{\circ}F$).

The display circuit 136 basically comprises
7-segment, 3-digit display such as that sold by National
Semiconductor, as Model NSA0038. The display is denoted herein by reference numeral DS1. As can be seen, pins 8, 9, 3, 5, 4, 10 and 11 of DS1 are connected to bus lines L15, L16, L17, L18, L19, L20 and L21 respectively. Input pins 4, 2 and 7 of the display DS1 are connected to respective outputs of three drivers U5-3, U5-4 and U5-5 respectively. The inputs to drivers U5-3, U5-4 and U5-5 are connected to lines L23, L24 and L27 respectively.

The display circuit 136 operates to provide an indication of system conditions eg. boiler water temperature, probe failure etc depending upon which of the input lines to the display DS1 are enabled. For example, on a probe failure the display reads "PRO".

Overall operation of the device 11 can best be understood by reference to the flow charts of Figures 4A and 4B. In the program listing of Figure 5, all of the steps of the program shown in the flow chart are identified. The label field of the program shown in the flow chart corresponds to the program sections shown in the program listing of Figure 5. The program listing is in assembly language of National Semiconductors and identified as COP400 series.

Referring now to Figures 4A and 4B, it can be seen that in the "PRESET" portion of the program, the initialisation and safety setting is accomplished.

Thereafter the safety timer is loaded to establish the delay period after the occurrence of an alarm condition, eg. CdS cell failure, and before a lockout occurs. During "TEMPIN" the boiler temperature and outdoor temperature, (offset) are inputted. During "PROCHK" the boiler thermistor 46 is checked. If the thermistor 46 has failed, then the "SAFETY" and "ALARM" portions of the program are carried out, whereupon the enable outputs to the pump and burner are disabled, so precluding the pump and burner from operating, and the alarm circuit is activated to produce the audible alarm. The display also provides a visual indication of the alarm condition at that time. If during "PROCHK" portion of the program the thermistor 46 is sensed as being functional, then the program moves to "DISPLA", whereupon the boiler water temperature is displayed by the display circuit.

Next, during the "HEATIF" portion of the program, the input from the thermostat 48 is checked by the micro-processor. If the thermostat is on and calling for heat, then the program proceeds to "GOHEAT", whereupon the high limit of the boiler and the low limit of the circulator, as defined by the limit switches, are stored in the microprocessor memory.

Next, the inputs to the microprocessor are checked to see if there is a request for hot-water override.

This occurs during the portion of the program identified as "HOTWTR". If no request for hot-water override is detected, the microprocessor proceeds to the next portion of the program, identified as "OUTSUB". Here a temperature which is a function of the outdoor temperature is offset (subtracted) from the value established by the high limit switch. The temperature which is subtracted is also a function of the efficiency setting of potentionmeter P2. Thus, one can adjust the potentiometer P2 to subtract $x^o$C for each $1^o$ change in outdoor temperature to take into account the insulative properties of the building. The program proceeds with "BURNON".

If a request for hot-water override is detected, the program skips the "OUTSUB" portion of the program and moves immediately to "BURNON". During the portion of the program identified as "BURNON", the burner is checked. If the burner is on, the program advances to the "HWCIRC" portion. If the burner is off, the program then proceeds to the portion of the program for preventing the burner from "short cycling". This portion is identified as "limit - $10^o$F" and acts to prevent the burner from turning on until the boiler temperature has dropped $3^o$C ($10^o$F) from the set limit (eg. the setting of the limit switch or the modulated temperature setting from "OUTSUB"). Then the program advances to "HWCIRC".

During "HWCIRC", the inputs are again checked for a hot-water override, and the mode of circulation is established for systems incorporating a domestic coil (summer/winter hook-up).

If the "HWCIRC" test is true, the program proceeds with "CIRCON". The portion of program "CIRCON" provides a similar $3^{\circ}C$ ($10^{\circ}F$) differential as described in "BURNON", for control of the pump to ensure an adequate supply of domestic hot water, in systems so equipped, regardless of a thermostat call-for-heat. If no hot-water override is detected, the circulator low-limit is set at $38^{\circ}C$ ($100^{\circ}F$) via "LOCIRC", and the program advances to "CIRCIF".

During "CIRCIF", if the temperature is less than the limit established by "CIRCON" or "LOCIRC", the pump is turned off. If the temperature is greater than that limit, the pump is turned on.

The temperature of the boiler is then checked during the BURNIF portion of the program. If the temperature is equal to or exceeds the preset limit, the burner is turned off and the program goes back to the "START" portion. If the temperature is less than the preselected limit, the program advances to the CDSCHK portion of the program during which the condition of the CdS cell is sensed.  If the CdS is defective, the program advances to the SAFETY and ALARM portions of the program. During the SAFETY and ALARM portions, the outputs to the burner and pump relays are disabled and the alarm circuit is initiated to provide an audible alarm of the lockout condition.  At the same time the display provides a visual indication of the specific alarm condition.

If the condition of the CdS cell is good, the program advances to the GOBURN portion at which time the burner is turned on.  The program then advances to the GOFIRE portion, wherein a safety timer (a portion of the microprocessor) is started.  During the next 15 seconds the program returns to the TEMPIN portion during which the microprocessor is inputted with the boiler temperature and offset temperature.  After 15 seconds have elapsed, the existence of a flame at the burner is checked.  If a flame exists, then the program returns to the START portion where in the safety timer is reloaded.  If no flame is sensed, then the program advances to the SAFETY and ALARM portions, wherein the pump and burner enable outputs are disabled and the alarm and display circuit activated to provide an indication of the alarm conditions.

If the thermostat does not call for heat during the HEATIF portion, the program advances to the NOHEAT portion wherein the microprocessor stores the low limit for hot water (assuming, of course, that the heating system includes a summer/winter coil so that there is a necessity for a low limit setting). The program then advances to the TESTHW portion.

During the TESTHW portion of the program the hot-water override inputs are checked. If there is a call for hot water, via either the manual depression of the button 50

or a call from a programmed timer 54, the program advances to the LOBURN portion of the program, wherein the condition of the burner is checked. If the burner is on during the LOBURN portion, the "low limit + $2^{\circ}C$ ($5^{\circ}F$)" function is

accomplished. In LOBURN, the system is not calling for

heat, but is calling for hot water. In such a case, the

boiler temperature is raised above the low limit by $2^{\circ}C$

($5^{\circ}F$) to maintain domestic hot water. The program then

advances to the NOCIRC portion, wherein the pump is turned off. If there is no call for a hot-water override, the

program clears the burner limit, then advances to the NOLIM portion, wherein the low-limit switch is checked for an off condition (no low-limit input). If the NOLIM test is

true, the program advances to the LOCIRC portion and herein

constant circulation is maintained down to $38^{\circ}C$ ($100^{\circ}F$) as

defined by LOCIRC, irrespective of a thermostat call for heat. It is in this mode that the greatest efficiency is

realised.

Operation then continues, via the CIRCIF, GOCIRC portions of the program to the BURNIF portion in the manner described, ie. the temperature is checked to see if below the pre-established limit and if so, the CdS cell is checked and the burner is turned on and the rest of the program proceeds as previously described.  If the temperature sensed is greater than the limit, the burner is turned off and the program then returns to the START portion.

As will be appreciated, the controller provides maximum functionality by incorporating into one unit

features of various add-on devices, while also providing unique monitoring, control and alarm features.  All of

this is accomplished by microprocessor-based circuitry, thereby

ensuring reliability, ease of operation and operational modification, via simple program modifications.  Moreover, the control system provides wide utility in that it can be

incorporated into various types of heating systems, eg. gas or oil-fired boiler systems, gas or oil-fired furnace systems,

systems having a summer/winter coil, systems having a gas, oil or electric hot water system etc, with or without modifications (depending on heating systems configuration).

0082669

AGENTS REF 1081

CLAIMS:

1.      An integrated multifunctional control device for the heating system for a building, the system comprising a fuel burner, a heat exchanger having a combustion side and a fluid heating side, heat radiating means coupled to the heat exchanger, circulatory means for transporting heating fluid between the exchanger and the radiating means, an adjustable thermostat in the building, a first temperature sensor located outside the building, a second temperature sensor for sensing the temperature of the fluid side of the heat exchanger, the sensors providing control signals to a control device, and limiting means for limiting the temperature of the fluid side of the heat exchanger characterised in that the integrated multifunctional device comprises a micro processor which is arranged to respond to the input signals from the first and second sensors and to generate separate control signals to the burner and the circulating means, and to disable the burner if the temperature limit of the fluid side of the heat exchanger will be exceeded.

2.      A device according to Claim 1, characterised
in that the micro processor is arranged to disable the
circulating means if the fluid side temperature falls
below a predetermined value.

3.      A device according to Claims 1 or 2 characterised
in that alarm means are associated with the temperature
sensing means for the fluid side temperature and the micro
processor is arranged to check and when necessary actuate
the alarm means.

4.      A device according to Claim 1, 2 or 3 characterised
in that display means are present to display the condition
of the monitors and alarm signals.

5.      A device according to any preceding Claim
characterised in that the device includes a limit and
decode circuit arranged to pass signals from the sensors
to the micro processor and to limit the maximum temperature
of the fluid side of the heat exchanger.

6.      A device according to any preceding Claim
characterised in that a circuit is provided for regulating
the power supply.

7.      A device according to any preceding Claim
characterised in that means are present for controlling the
domestic hot water temperature in response to an external
signal when the boiler water temperature is below a predetermined threshold value.

8.      A device according to Claim 7 characterised in that the external signal is an over-ride signal and the controlling means is responsive to the over-ride signal and the micro processor is responsive to the over-ride control means and arranged to actuate the burner to raise the temperature of the domestic water for a predetermined time period.

9.      A device according to Claim 7 or 8 characterised in that a manually operable switch is present to generate the over-ride signal.

10.      A device according to Claim 7, 8 or 9 characterised in that programmable clock means are present to generate the over-ride signals.

11.      A system according to any of Claims 7 to 10, characterised in that disabling means are present to disable the pump is the water temperature is being raised such that the building temperature will exceed its predetermined upper limit during the over-ride period.

12.      A device according to any preceding Claim characterised in that a light-detecting element is present for detecting and signalling the existence of a flame at an oil-fired burner and for providing a signal indicative thereof, and the micro-processor is responsive to the signal and is arranged to disable the burner and the
circulating means if the light-detecting means fails to
provide the signal within a predetermined time after the
burner is called upon to ignite by the micro processor.

# FIG. 1

CONTROLLER 20

SUMMER/WINTER DOMESTIC HOT WATER SYSTEM 42

140

148

150

152

160

158

OPTIONAL HOT WATER TIMER 54

HOT WATER OVER-RIDE BUTTON 52

138

THERMOSTAT

146

48

OUTDOOR THERMISTOR 50

BOILER 26

46

CIRCULATOR 28

40

38

FUEL SUPPLY 34

36

32

BURNER

44

CDS CELL

24

BASEBOARD HEATER 30

1/6

0082669

FIG. 2

# FIG. 3A

FIG. 3B

FIG. 4A

FIG. 4B

```
        TITLE COMCON, 'THERMONIC CONTROL'


; THE FOLLOWING PROGRAM PROVIDES FOR A COMPLETE OPERATING
, CONTROL SYSTEM INCLUDING ADJUSTABLE BOILER HI-LIMIT AND
; DOMESTIC COIL LO-LIMIT SETTINGS, BURNER ON/OFF CONTROL,
; CIRCULATOR RUN-ON CONTROL WITH AN AUTOMATIC TURN-OFF,
; OUTDOOR SENSE TEMPERATURE MODULATION, THERMOSTAT AND CDS
; CELL INPUTS, DIGITAL DISPLAY OF BOILER TEMPERATURE AND
; FAULT CONDITIONS IN CONJUNCTION WITH AN AUDIBLE ALARM
; INDICATOR AND A SAFETY LOCK-OUT REQUIRING MANUAL RESET.



PRESET: CLRA
        XAD     0,7             ; SET FLAG FOR BOILER PROBE
        OGI     4               ; INITIALIZE "G" PORT
        LBI     1,12            ; CLEAR CDS FLAG
        STII    0


START:  LBI     3,8             ; STORE FLAME SENSE TIME
        STII    10


TEMPIN: LBI     0,7             ; TEST PROBE FLAG FOR WHICH
        SKMBZ   0               ;   COUNTER TO ENABLE
        LBI     2,13
        LBI     2,9
        STII    0               ; CLEAR COUNTER
        STII    0
        STII    0
        LBI     0,7             ; TOGGLE FLAG
        SKMBZ   0
        JP      RESET
        SMB     0               ; FLAG OUTDOOR PROBE
        LBI     0,8
        JP      SET
RESET:  RMB     0               ; FLAG BOILER PROBE
        LBI     0,0
SET:    OBD                     ; OUTPUT FLAG
        LEI     0,14            ; PRESET "TEMPIN" TIMER
        STII    1
        STII    3

        LEI     2               ; ENABLE INTERRUPT

TIME:   SKT                     ; CLK ON INTERNAL TIMER
        JP      TIME

COUNT:  LBI     0,14            ; INCREMENT THE TIMER
        SC
BINADD: CLRA
        ASC
        NOP
        XIS
        JP      BINADD
        SKC                     ; TIMING COMPLETE ?
        JP      TIME            ; NO ! CONTINUE
        LEI     0               ; YES ! DISABLE INTERRUPT

        JSR     PROCHK
```

EXHIBIT A-1

FIG.5A.

```
          ININ                    ; THERMOSTAT "ON" ?
          AISC      8             ; YES !
          JMP       NOHEAT        ; NO !


GOHEAT:   LBI       3,14          ; LOAD MAXIMUM HI-LIMIT
          STII      2
          STII      2
          SC
          JSR       HILIM         ; INPUT HI-LIMIT SWITCH

          CLRA
          AISC      1             ; INTER-STROBE DELAY
          JP        .-1

          LBI       3,10          ; LOAD MAXIMUM LO-LIMIT
          STII      8
          STII      1
          RC
          JSR       LOLIM         ; INPUT LO-LIMIT. SWITCH


HOTWTR:   CLRA
          LBI       3,0           ; HOT-WATER-OVERRIDE ?
          SKE                     ; NO !
          JP        BURNON        ; YES !


OUTSUB:   LBI       2,13          ; SUBTRACT OUTDOOR OFFSET
          SC                      ;    FROM BURNER LIMIT
          LD        1
          CASC
          ADT
          XIS       1
          JP        .-4


BURNON:   SKGBZ     0             ; BURNER "ON" ?
          JP        HWCIRC        ; YES !
          LBI       1,14          ; NO !
          STII      1             ; STORE DIFFERENTIAL
          STII      0

BCDSUB:   LBI       1,14          ; SUBTRACT DIFFERENTIAL
          SC
          LD        2
          CASC
          ADT
          XIS       2
          JP        .-4


HWCIRC:   CLRA
          LBI       3,0           ; HOT-WATER-OVERRIDE ?
          SKE                     ; NO !
          JP        CIRCON        ; YES !


LOCIRC:   LBI       3,9           ; CIRCULATOR CUT-OFF LIMIT .
          STII      0
          STII      0
          STII      1
```

EXHIBIT A-2    FIG. 5B.

```
CIRCON:  SKGBZ   1              ; CIRCULATOR "ON" ?
         JP      .+2            ; YES !
         JP      CIRCIF         ; NO !
         LBI     1,10           ; STORE DIFFERENTIAL
         STII    1
         STII    0


LOSUB:   LBI     1,10           ; SUBTRACT DIFFERENTIAL
         SC
         LD      2
         CASC
         ADT
         XIS     2
         LD      2
         CASC
         ADT
         X


CIRCIF:  CLRA
         RC
         LDD     3,9            ; LOAD FIRST DIGIT
         LBI     2,9            ; POINT TO INPUT
         CASC                   ; COMP & ADD "A" TO INPUT
         NOP
         LDD     3,10           ; LOAD NEXT DIGIT
         LBI     2,10           ; POINT TO INPUT
         CASC                   ; COMP & ADD "A" TO INPUT
         NOP
         LDD     3,11           ; LOAD LAST DIGIT
         LBI     2,11           ; POINT TO INPUT
         CASC                   ; COMP & ADD "A" TO INPUT
         JP      NOCIRC         ; INPUT < LIMIT


GOCIRC:  SKGBZ   0              ; TEST FOR BURNER "OFF" ?
         JP      .+4
         OGI     6              ; YES ! CIRC "ON" / BURN "OFF"
         JP      .+3
         OGI     7              ; NO ! CIRC "ON" / BURN "ON"
         JP      BURNIF


NOCIRC:  SKGBZ   0              ; TEST FOR BURNER "OFF" ?
         JP      .+4
         OGI     4              ; YES ! CIRC "OFF" / BURN "OFF"
         JP      .+3
         OGI     5              ; NO ! CIRC "OFF" / BURN "ON"
         JP      BURNIF


NOHEAT.  LBI     3,14           ; LOAD MAXIMUM LO-LIMIT
         STII    8
         STII    1
         SC
         JSR     LOLIM          ; INPUT LO-LIMIT SWITCH


TESTHW:  LBI     3,0            ; HOT-WATER-OVERRIDE ?
         CLRA
         SKE                    ; NO !
         JP      LOBURN         ; YES !
```

FIG. 5C.

```
           LBI    3,13        ;CLEAR BURNER LIMIT
           STII   0
           STII   0
           STII   0
           JMP    NOLIM


LOBURN:    SKGBZ  0           ;BURNER "ON" ?
           JP     .+2
           JP     NOCIRC      ;NO !
           LBI    3,13        ;YES !
           STII   5           ;STORE DIFFERENTIAL
           JP     NOCIRC


BURNIF:    CLRA
           RC
           LDD    2,6         ;LOAD FIRST INPUT
           LBI    3,13        ;POINT TO LIMIT
           CASC               ;COMP & ADD "A" TO LIMIT
           NOP
           LDD    2,7         ;LOAD NEXT INPUT
           LBI    3,14        ;POINT TO LIMIT
           CASC               ;COMP & ADD "A" TO LIMIT
           NOP
           LDD    2,8         ;LOAD LAST INPUT
           LBI    3,15        ;POINT TO LIMIT
           CASC               ;COMP & ADD "A" TO LIMIT
           JP     NOBURN      ;INPUT > LIMIT


CDSCHK:    LBI    1,12        ;CDS CELL "PROVE" CHECK
           SKMBZ  0           ;   BEFORE BURNER ENABLE
           JP     GOBURN
           CLRA
           ININ
           JSR    CDS


GOBURN:    SKGBZ  1           ;TEST FOR CIRCULATOR "OFF" ?
           JP     .+4
           OGI    5           ;YES ! BURN "ON" / CIRC "OFF"
           JP     .+3
           OGI    7           ;NO ! BURN "ON" / CIRC "ON"


GOFIRE:    LBI    3,8         ;FLAME SENSE TIMER
           SC
           CLRA
           ASC
           X
           SKC
           JMP    TEMPIN
           CLRA               ;TEST FLAME SENSE INPUT
           ININ
           XAD    0,3
           LBI    0,3
           SKMBZ  2
           JMP    START
           JMP    NOFIRE


NOBURN·    SKGBZ  1           ;TEST FOR CIRCULATOR "OFF" ?
           JP     .+4
           OGI    4           ;YES ! BURN "OFF" / CIRC "OFF"
           JP     .+3
```

EXHIBIT A-4    FIG. 5D.

```
        OGI      6              ;NO ! BURN "OFF" / CIRC "ON"
        LBI      1,12
        STII     0

        JMP      START          ;LOOP TO START


        .=X'0FF                 ;LOAD X'0FF WITH NOP
INTENT: NOP                     ;   FOR INTERRUPT ENTRY

        XAD      2,1            ;SAVE STATUS
        CBA
        XAD      2,2
        XABR
        SKC
        AISC     8
        XAD      2,3

INTRPT: LBI      0,7            ;BCD ADD "TEMPIN"
        SKMBZ    0
        LBI      2,9            ;BOILER COUNTER MEMORY
        LBI      2,13           ;OUTDOOR COUNTER MEMORY
        SC
        CLRA
        AISC     6
        ASC
        ADT
        XIS
        CLRA
        AISC     6
        ASC
        ADT
        XIS
        CLRA
        AISC     6
        ASC
        ADT
        X

        LDD      2,9            ;STORE DUPLICATE "TEMPIN"
        XAD      2,6
        LDD      2,10
        XAD      2,7
        LDD      2,11
        XAD      2,8

        LDD      2,3            ;RESTORE STATUS
        RC
        AISC     8
        SC
        XABR
        LDD      2,2
        CAB
        LDD      2,1

        LEI      2              ;RE-ENABLE INTERRUPT

        RET                     ;CONTINUE "TIME"



        . PAGE 5

        . WORD 03F, 006, 05B, 04F, 066;   0-4
        . WORD 06D, 07D, 007, 07F, 06F;   5-9
        . WORD 071, 038, 077;  "FLA"
```

# FIG. 5E.

EXHIBIT A-5

```
                WORD 073, 050, 05C;   "PRO"


PROCHK: CLRA                        ;CHECK BOILER PROBE
        LBI     2,10
        SKE
        JP      LIMIT
        LBI     2,11
        SKE
        JP      LIMIT
        JP      CTR

LIMIT:  SC
        CLRA
        AISC    6
        LBI     2,10
        CASC
        NOP
        CLRA
        AISC    2
        LBI     2,11
        CASC
        JMP     GOPRO

CTR:    LBI     1,0
        SC
        CLRA
        ASC
        X
        SKMBZ   3
        JP      NOPRO
        JMP     DISPLA


NOPRO:  LBI     2,9                 ;PROBE CHECK ALARM OUTPUT
        STII    15
        STII    14                  ;LOAD WORD "PRO" INTO RAM
        STII    13
        JP      SAFETY


NOFIRE: LBI     2,9                 ;NO FLAME ALARM OUTPUT
        STII    12
        STII    11                  ;LOAD WORD "FLA" INTO RAM
        STII    10


SAFETY: OGI     0                   ;DISABLE ALL OUTPUTS

ALARM:  JSR     DISPLA              ;DISPLAY ALARM CONDITION
        SKGBZ   3
        JP      SAFETY
        OGI     8                   ;ENABLE ALARM OUTPUT
        JMP     ALARM


GOPRO:  LBI     1,0
        STII    0


DISPLA: LBI     0,12                ;PRESET "DISPLA" TIMER
        STII    13
        STII    11

CLK:    SKT                         ;CLK ON INTERNAL TIMER
```

```
        JP      -1
                                ; BLANK THE DISPLAY
        CLRA
        CAB
        OBD

        LBI     0, 1            ; OUTPUT FIRST DIGIT
        OBD
        LBI     2, 9            ; DIGIT 1 DATA LOCATION
        CLRA
        AISC    4               ; POINT TO TABLE PAGE
        LQID                    ; LOAD SEGMENT CONVERSION
        LEI     4               ; ENABLE SEGMENT OUTPUTS
        SKT
        JP      . -1
        LEI     0               ; RESET SEGMENT OUTPUTS

        LBI     0, 2            ; OUTPUT NEXT DIGIT
        OBD
        LBI     2, 10           ; DIGIT 2 DATA LOCATION
        CLRA
        AISC    4               ; POINT TO TABLE PAGE
        LQID                    ; LOAD SEGMENT CONVERSION
        LEI     4               ; ENABLE SEGMENT OUTPUTS
        SKT
        JP      . -1
        LEI     0               ; RESET SEGMENT OUTPUTS

        LBI     0, 4            ; OUTPUT LAST DIGIT
        OBD
        LBI     2, 11           ; DIGIT 3 DATA LOCATION
        CLRA
        AISC    4               ; POINT TO TABLE PAGE
        LQID                    ; LOAD SEGMENT CONVERSION
        LEI     4               ; ENABLE SEGMENT OUTPUTS
        SKT
        JMP     . -1
        LEI     0               ; RESET SEGMENT OUTPUTS

        CLRA                    ; BLANK THE DISPLAY
        CAB
        OBD

        LBI     .0, 12          ; INCREMENT THE TIMER
        SC
        CLRA                    ; BINARY ADD "CLK"
        ASC
        NOP
        XIS
        CLRA
        ASC
        NOP
        X
        SKC
        JMP     CLK

        RET                     ; RETURN TO MAIN PROGRAM


NOLIM:  CLRA
        ININ                    ; CIRCULATOR "RUN-ON" ?
        XAD     2, 0
        LBI     2, 0
        SKMBZ   0
        JMP     NOCIRC          ; NO !
        JMP     LOCIRC          ; YES !
```

EXHIBIT A-7    FIG. 5G.

```
LOLIM:  LBI    0,8          ; STROBE LO-LIMIT

HILIM:  LBI    0,9          ; STROBE HI-LIMIT
        OBD
        SKC
        LBI    3,9
        LBI    3,13
        STII   0
        LBI    3,0          ; INPUT LIMIT SWITCH
        INL
        SKC
        LBI    3,10
        LBI    3,14
        SC                  ; SUBTRACT SWITCH INPUT
        CASC
        ADT
        XIS
        CLRA
        CASC
        ADT
        X
        LBI    0,0          ; RESET STROBE
        OBD

        RET


CDS:    XAD    0,3
        LBI    0,3
        SKMBZ  2
        JMP    NOFIRE
        LBI    1,12
        STII   1
        RET

        END
```

# FIG. 5H.